# EUROPÄISCHE PATENTSCHRIFT

(11) **EP 1 270 662 B1**
(45) Veröffentlichungstag und Bekanntmachung des Hinweises auf die Patenterteilung: **07.06.2006**
(21) Anmeldenummer: 02012396.4
(22) Anmeldetag: 07.06.2002
(51) Int. Cl.: C08L 1/26, C08L 1/28, C08J 3/05, D21H 17/26

(54) **Hydrokolloidzusammensetzung sowie deren Verwendung zur Herstellung redispergierbarer Beschichtungen, Filme, Folien oder Papiere**
Hydrocolloid compositions and their use for the manufacture of redispersable coatings, films, sheets and papers
Compositions d'hydrocolloides et leur utilisation pour la préparation de revêtements, films, feuilles et papiers redispersables

(30) Priorität: 20.06.2001 DE 10129674
(43) Veröffentlichungstag der Anmeldung: 02.01.2003
(73) Patentinhaber: Wolff Cellulosics GmbH & Co.KG, 29656 Walsrode (DE); Lohmann GmbH & Co. KG, 56513 Neuwied (DE)
(72) Erfinder: Kiesewetter, René, Dr., 29649 Wietzendorf (DE); Lange, Werner, Dr., 27314 Visselhövede (DE); Wehmann, Jörg, 56589 Datzeroth (DE); Engler, Petra, 56567 Neuwied (DE)
(74) Vertreter: Feldhues, Michael L.F.

(56) Entgegenhaltungen:
- EP-A- 1 088 938
- WO-A-98/56360
- DE-A- 19 725 448
- DE-A- 19 824 650
- US-A- 5 051 304
- US-A- 5 110 525

## Beschreibung

Die Erfindung betrifft Abmischungen von Hydrokolloiden und deren Verwendung zur Herstellung redispergierbarer Beschichtungen, Filme, Folien oder Papiere.

Unter Hydrokolloidzusammensetzungen werden solche Systeme verstanden, die aus wenigstem einem, höchstens jedoch fünf vernetzten oder unvernetzten, kalt- und gleichzeitig heißwasserlöslichen Polysacchariden und/oder Polysaccharidderivaten einerseits und/oder wenigstens einem, höchstens aber fünf vernetzten oder unvernetzten, kaltwasserunlöslichen oder kaltwasserquellbaren, aber heißwasserlöslichen Biopolymeren oder Biopolymerderivaten mit einem thermoreversiblen Gelpunkt von <100°C andererseits und/oder ein bis fünf kaltwasserlöslichen aber gleichzeitig heißwasserunlöslichen Biopolymeren oder Biopolymerderivaten mit einem thermoreversiblen Flockpunkt im Bereich von 25 bis 100°C und gegebenenfalls Fasern, insbesondere Cellulosefasern, bestehen. Zusätzlich können weitere Additive, wie Quellmittel und Netz- und Dispergierhilfsmittel, Verzögerungsmittel, Pigmente und Füllstoffe, Mattierungsmittel, optische Aufheller, Bindemittel hinzugesetzt werden, ohne dass dadurch das Wesen der Erfindung beeinträchtigt wird.

Es ist seit längerem bekannt, dass in Wasser auflösbare oder redispergierbare Filme, Folien und Beschichtungen herstellbar sind. Die Bereitstellung derartiger Produkte ist jedoch nur mit hohem technischen Aufwand möglich. Ebenso ist die Wiederauflösung oder Redispergierung derartiger Produkte mit ökologischen Nachteilen verbunden, sei es, dass die Produkte gar nicht abgebaut werden oder sich in der Natur (z.B. auf Deponien) inert verhalten oder nur als sehr schwer oder bedingt biologisch abbaubar eingestuft werden können. Darüber hinaus muss der Anwender beim Einsatz derartiger Produkte oftmals technische Nachteile in Kauf nehmen wie z.B. Sprödigkeit, mangelnde Lagerstabilität, schlechten Spritzwasserschutz bei sich bildendem Kondenswasser in Kühlhäusern o.ä., schlechte Wasserlöslichkeit oder Redispergierbarkeit beim Reinigen der mit den Filmen oder Papieren versehenen Objekte, wie z.B. Getränkekisten. Diese Nachteile führen dazu, dass derartige Produkte nur eine mangelnde Akzeptanz im Markt erfahren.

In EP-A 143 935, EP-A 311 906 und EP-A 316 676 werden redispergierbare Produkte bezeichnet, die, da sie nicht selbsttragend sind, mit Träger- oder Stützmaterialien verbunden werden müssen. Zudem werden, wie auch in DE-A-195 36 346 und DE-A-37 27 744 beschrieben, synthetische Produkte oder Produktgemische auf Acrylat- oder Polyvinylchloridbasis eingesetzt, die sich als synthetische Produkte zwar in der Natur inert verhalten, aber nicht oder nur schwer biologisch abbaubar sind. Darüber hinaus belasten derartige Systeme das Ökosystem, da Produkte, die auf Basis von Kohlenwasserstoffen gefertigt werden, nicht zu den regenerierbaren Rohstoffen gezählt werden können.

In DE-A-20 42 781 und DE-A-22 01 067 werden Verfahren zur kommerziellen Herstellung von sich schnell in Wasser redispergierenden Papieren beschrieben. Hierbei werden halbsynthetische Produkte auf Cellulosebasis verwendet. Allerdings müssen hierfür zusätzliche Hilfsmittel, wie Metallsalze, hinzugesetzt werden, die als ökologisch bedenklich gelten. Zudem werden mit Ethylen/Acrylsäure-Copolymerisaten synthetische, also zwar inerte, biologisch aber sehr schwer abbaubare Verbindungen als Filmbildner verwendet. Beide Anmeldungen beschreiben zudem Verfahren, bei denen hohe Anteile von Cellulose- oder Celluloseetherfasern zur Verbesserung der Gefügefestigkeit verwendet werden. Die Bereitstellung derartig ausgerüsteter Papiere oder Beschichtungen macht es erforderlich, sich der relativ aufwendigen und kostenintensiven Technik zu bedienen, wie sie für die Herstellung von Papieren üblich ist [s. z.B. 1.) "Ullmanns Encyklopädie der technischen Chemie" [4. Auflage, Verlag Chemie, Weinheim - New York, 1979, Band 17 S. 578- 635 und 2.) W. Schweers in: Winnacker-Küchler "Chemische Technologie", 4. Auflage, Carl Hanser Verlag München Wien 1981, S. 627 - 640].

EP-A 1 088 938 beschreibt in Wasser dispergierbare Papiere, für deren Herstellung synthetische Produkte auf Cellulosebasis eingesetzt werden.

DE-A 198 24 650 offenbart redispergierbare Polymerpulver erhalten durch Sprühtrocknung von z.B. Ethylcellulose

WO 98/56360 offenbart filmüberzogene Tabletten. Ein bevorzugtes Bindemittel ist dabei Hydroxypropylmethylcellulose kombiniert mit Hydroxypropylcellulose oder Carboxymethylcellulose.

US 5,110,525 beschreibt Zusammensetzungen aus quellfähigen nichtionischen Celluloseethern, filmbildenden ionischen Celluloseethern, gebleichter Cellulose und Glasfasern

US 5,051,304 offenbart eine Zusammensetzung auf Basis von Gelatine und eines wasserlöslichen Polysaccharids wie z.B. Carboxymethylcellulose zur Herstellung von Mikrokapseln.

Aufgabe der vorliegenden Erfindung ist es, Produkte zur Herstellung redispergierbarer Filme bzw. Folien oder als Hilfsmittel für die Herstellung redispergierbarer Beschichtungen oder als Substitut für redispergierbare Papiere, Pappen oder Kartons bereitzustellen, die den gehobenen technischen Ansprüchen des Marktes Rechnung tragen und die vorgenannten technischen Nachteile nicht aufweisen. Zudem soll die Bereitstellung derartiger Produkte einfach und kostengünstig sein.

Überraschenderweise wurde gefunden, dass Zusammensetzungen von Hydrokolloiden aus wenigstem einem, höchstens jedoch fünf vernetzten oder unvernetzten, kalt- und gleichzeitig heißwasserlöslichen Polysacchariden und/oder Polysaccharidderivaten einerseits und/oder wenigstens einem, höchstens aber fünf vernetzten oder unvernetzten, kaltwasserunlöslichen oder kaltwasserquellbaren, aber heißwasserlöslichen Biopolymeren oder Biopolymerderivaten mit einem thermoreversiblen Gelpunkt von <100°C andererseits und/oder ein bis fünf kaltwasserlöslichen, aber gleichzeitig heißwasserunlöslichen Biopolymeren oder Biopolymerderivaten mit einem thermoreversiblen Flockpunkt im Bereich von 25°C bis 100°C und ggf. Fasern, wie z. B. synthetischen oder natürlichen Fasern diese Aufgabe lösen.

Die erfindungsgemäß beanspruchten Produkte setzen sich zusammen aus:
a) ein bis fünf kalt- und gleichzeitig heißwasserlöslichen Polysacchariden und/oder Polysaccharidderivaten und
   b1) ein bis fünf kaltwasserunlöslichen aber gleichzeitig heißwasserlöslichen Biopolymeren oder Biopolymerderivaten mit einem thermoreversiblen Gel- bsw. Schmelzpunkt von <100°C und/oder
   b2) ein bis fünf kaltwasserlöslichen aber gleichzeitig heißwasserunlöslichen Biopolymere oder Biopolymerderivate mit einem thermoreversiblen Flockpunkt im Bereich von 25°C bis 100°C und
c) Fasern, insbesondere Cellulosefasern
   sowie gegebenenfalls
d) weitere Additive.

Unter kalt- und gleichzeitig heißwasserlöslichen Polysacchariden oder Polysaccharidderivate a), werden sowohl Homo- als auch Heteropolysacchariden, wie native oder veredelte, insbesondere veretherte oder veresterte Naturstoffe auf Basis Glucose, Fructose, Mannose, Glucuronsäure, Galaktose, Galacturonsäure, Polyuronsäure, Cellulose, Stärke oder Polygalaktomannan ohne thermoreversiblen Flock- oder Gelpunkt verstanden. Besonders bevorzugt werden ionische oder nicht-ionische Cellulose- und Stärkeether, wie z.B. oxidierte, kationisierte, hydroxyalkylierte, alkylierte und carboxyalkylierte Celluloseether, Stärkeether [z.B. Hydroxypropylstärke oder Carboxymethylstärke] Guar, ionische oder nicht-ionische Guarether [z.B. Hydroxypropyl- oder Carboxymethylguar], Johannisbrotkernmehl, Chitosan und Chitosanderivate, Alginate, natürliche Gummi [Gummi arabicum, Kristallgummi], Traganth, Tamarinde sowie Xanthane beansprucht.

Als Celluloseether werden insbesondere solche Produkte beansprucht, die aufgrund der Art und Höhe ihres Substitutionsgrades unter Normaldruck keinen thermischen Flock- oder Gelpunkt von <100°C aufweisen, wie z.B. anionische, kationische oder nicht-ionische Celluloseether, wie Carboxyalkylcellulosen [z.B. Carboxymethylcellulose], Hydroxyalkylcellulosen [z.B. Hydroxyethyl-, Hydroxypropylcellulosen], Carboxyalkylhydroxyalkylcellulosen [wie z.B. Carboxymethylhydroxyethyl-, Carboxymethylhydroxypropylcellulose], Sulfoalkyl- und Hydroxyalkyl-Sulfoalkyl- sowie Alkyl-Sulfoalkylcelluloseether und Carboxymethyl-Sulfoalkylcelluloseether (z.B. Sulfoethylcellulose, Sulfopropylcellulose, Methylsulfoethylcellulose, Methylsulfopropyl-cellulose, Carboxymethylsulfoethylcellulose, Carboxymethylsulfopropylcellulose, Hydroxyethyl-Sulfoethylcellulose, Hydroxypropyl-Sulfoethylcellulose], Alkylcellulosen [z.B. Methylcellulose, Ethylcellulose], Hydroxyalkylcellulosen [z.B. Hydroxyethyl-cellulose], Alkylhydroxyalkylcellulose (z.B. Methylhydroxyethylcellulose, Ethylhydroxyethylcellulose, Methylhydroxypropylcellulose, Ethylhydroxypropylcellulose] Alkylencellulosen (wie z.B. Allylcellulose), Alkylenalkylcellulosen [wie z.B. Allylmethylcellulose, Allylethylcellulose], Dialkylaminoalkylcellulosen [z.B. Diethylaminoethylcellulose], Dialkylaminoalkyl-hydroxyalkylcellulosen (wie z.B. Diethylaminoethylhydroxyethylcellulosen) ternäre ionische und nicht-ionische Mischether, wie z.B. Alkyl-Hydroxyalkyl-Hydroxyalkylcellulosen [Methyl-Hydroxypropyl-Hydroxyethyl-cellulosen, Ethyl-Hydroxypropyl-Hydroxyethylcellulosen], Alkyl-Hydroxyalkyl-Carboxy-Alkylcellulose-Mischether [Methyl-Hydroxyethyl-Carboxymethylcellulosen, Methyl-Hydroxypropyl-Carboxymethylcellulosen, Ethyl-Hydroxypropyl-Carboxymethylcellulosen, Ethyl-Hydroxyethyl-Carboxymethylcellulosen], Alkyl-Hydroxyalkyl-Sulfoalkylcellulosen [Methyl-Hydroxyethyl-Sulfoethylcellulosen, Methyl-Hydroxypropyl-Sulfoethylcellulosen, Ethyl-Hydroxypropyl-Sulfoethylcellulosen, Ethyl-Hydroxyethyl-Sulfoethylcellulosen], Hydroxyalkyl-Hydroxyalkyl-Carboxymethylcellulose [Hydroxyethyl-Hydroxypropyl-Carboxymethylcellulose], Hydroxyalkyl-Hydroxyalkyl-Sulfoalkylcellulose ([Hydroxy-ethyl-Hydroxypropyl-Sulfoethylcellulose]. Ferner werden binäre oder ternäre ionische oder nicht-ionische Celluloseether aus den oben genannten funktionellen Gruppen allein oder als Abmischung beansprucht.

Unter kaltwasserunlöslichen, aber gleichzeitig heißwasserlöslichen bzw. heißwasserdispergierbaren Biopolymeren oder Biopolymerderivaten b1) werden solche Produkte verstanden, die in Wasser unter Normaldruck einen thermoreversiblen Gel- oder Schmelzpunkt von <100°C, vorzugsweise von <80°C, insbesondere <70°C besitzen und damit erst in heißem Wasser löslich oder dispergierbar werden. Hierzu gehören native, also weitgehend naturbelassene, chemisch unveränderte oder veredelte, chemisch modifizierte Biopolymere auf Basis von Glucose, Fructose, Mannose, Glucuronsäure, Galaktose, Galakturonsäure, teil- oder vollständig veresterter Galacturonsäure sowie Polyuronsäure. Ferner gehören dazu Polypeptide sowie Polypeptidderivate, Polygalaktomannane, Gellane bzw. Gemische solcher Bioploymere, die die vorgenannten funktionellen Gruppen enthalten. Des Weiteren werden Gelatineprodukte sowie Umsetzungsprodukte von Polypeptiden mit mono- oder polyfunktionellen Reagenzien, wie z.B. Acylierungsmitteln, Aldehyden, Epoxiden, Halogenverbindungen, Cyanamiden oder aktivierten ungesättigten Verbindungen beansprucht.

Ferner sind glykosidische Pflanzenstoffe auf Basis Galakturonsäure bzw. mit Methanol veresterten Galakturonsäureeinheiten [sog. Pektine], insbesondere solche mit Molmassen von 5.000 - 600.000 g/mol einsetzbar. Weiterhin können Heteropolysaccharide wie Agar und Carraghenane, teil- oder vollständig veresterte Galaktosen, wie z.B. sulfatierte Galaktosen und Anhydrogalaktosen, Kappa-, Iota- und Lambda-Carraghenane sowie Gemische derselben, insbesondere solche mit Molmassen von 100.000 - 800.000 g/mol, Johannesbrotkernmehl sowie Gemische der oben bezeichneten Verbindungen. wie z.B. Abmischungen von Johannesbrotkernmehl mit Xanthan oder Kappa-Carraghenanen, eingesetzt werden. Insbesondere wird Gelatine, vorzugsweise solche mit einem isoelektrischen Punkt von 4-10 sowie mit Molmassen von 5.000 bis >25.0000 g/mol beansprucht. Die Herkunft sowie die Gelfestigkeit, sog. Bloomwert, der erfindungsgemäß beanspruchten Gelatinen ist dabei für das Wesen der Erfindung unerheblich und orientiert sich ausschließlich an anwendungstechnischen Notwendigkeiten. Einsetzbar ist sowohl die nach einem sauren Verfahren [Schweinehäute, Ossein] als auch die nach einem alkalischen Verfahren [Ossein, Rinderhäute] gewonnene Gelatine (sogenannte Gelatinetypen der Kategorie A und der Kategorie B) [s. hierzu auch: R. Heiss, Lebensmitteltechnologie, Springer Verlag 1988].

Unter kaltwasserlöslichen und gleichzeitig heißwasserunlöslichen Biopolymeren oder Biopolymerderivate b2) werden solche Produkte verstanden, die in Wasser unter Normaldruck einen thermoreversiblen Flockpunkt von <100°C und >25°C, vorzugsweise von >45°C und <100°C besitzen. Hierzu gehören native oder veredelte Biopolymere auf Basis von Glucose, Fructose, Mannose, Glucuronsäure, Galaktose, Cellulose; insbesondere werden folgende Celluloseether beansprucht: Alkylcellulosen [z.B. Methylcellulose, Ethylcellulose], Hydroxyalkylcellulosen [z.B. Hydroxypropylcellulose], Alkylhydroxyalkylcellulose (z.B. Methylhydroxyethylcellulose, Ethylhydroxyethylcellulose, Methylhydroxypropylcellulose, Ethylhydroxypropylcellulose], Alkylencellulosen (wie z.B. Allylcellulose), Alkylenalkylcellulosen [wie z.B. Allylmethylcellulose, Allylethylcellulose], ternäre nicht-ionische Mischether, wie z.B. Alkyl-Hydroxyalkyl-Hydroxyalkylcellulosen [Methyl-Hydroxypropyl-Hydroxyethylcellulosen, Ethyl-Hydroxypropyl-Hydroxyethylcellulosen] sowie mit langkettigen Alkylresten hydrophob modifizierte Hydroxyalkylcellulosen. Besonders bevorzugt werden nicht-ionische Celluloseether, wie z.B. Hydroxypropylcellulosen, Ethyl-Hydroxyethylcellulosen, Ethyl-Hydroxypropylcellulosen Methyl-Hydroxyethylcellulosen und Methyl-Hydroxypropylcellulosen beansprucht.

In der erfindungsgemäß beanspruchten Hydrokolloidabmischung werden auch Fasern c) eingesetzt. Als Fasern werden natürliche oder synthetische Fasern, insbesondere aber eine Vielzahl verschiedenartigster natürlicher Fasermaterialien oder Fasermaterialabmischungen bevorzugt natürliche Baumwoll-, Holzfaser- oder Holzfaserbegleitstoffe auf Basis Cellulose, wie z.B. Cellulosechemiezellstoffe, Linters-, Rohlinters-, Nadelholz-Sulfit-, Nadelholz-Sulfat- Natronzellstoffe und/oder Laubholzzellstoffe in gebleichtem oder ungebleichtem Zustand, Hemicellulosen, Lignin, Holzschliff und Druckschliff, Halbzellstoff, Refiner Mechanical Pulp (RMP), thermomechanischer Stoff (TMP) und/oder chemothermomechanischer Stoff (CTMP) sowie Papierstoffe aus allen Einjahrespflanzen Hemicellulose und Lignin, vorzugsweise solche mit einer durchschnittlichen Faserlänge von max. 3000 µm, insbesondere <1000 µm eingesetzt. Derartige Fasern können sowohl in chemisch unmodifizierter als auch modifizierter Form der erfindungsgemäß beanspruchten Hydrokolloidzusammensetzung hinzugesetzt werden. Dabei muss jedoch sichergestellt werden, dass der typische Fasercharakter beibehalten wird. Danach sind z. B. auch mit Alkali aufgeschlossene und/oder teilveretherte Fasern der vorgenannten Art, die sauer oder alkalisch aufgeschlossen und/oder mit chemischen Reagenzien (wie z.B. Alkylhalogeniden [z.B. Methylchlorid) und/oder Hydroxyalkylierungsmitteln (wie z.B. Ethylenoxid oder Propylenoxid) und/oder Carboxyalkylierungsmitteln (z.B. Chloressigsäure oder Natriumchloracetat)] umgesetzt werden, einsetzbar. Bei derart teilveretherten Cellulosederivaten, insbesondere Celluloseethern, handelt es sich um solche Produkte, die, im Gegensatz zu den ebenfalls in der Hydrokolloidabmischung enthaltenen kalt- und/oder heißwasserlöslichen Polysacchariden oder Polysaccharidethern sehr schlecht oder überhaupt nicht wasserlöslich oder nur wasserquellbar sind, aber über eine noch ausgeprägte Faserstruktur verfügen. Für die Gewährleistung der Wasserunlöslichkeit ist bei Einsatz von Cellulosederivaten, insbesondere Celluloseethern, der Gesamtsubstitutionsgrad (sogenannter Gesamt-Durchschnittssubstitutionsgrad (= DS) ausschlaggebend, der, wenn anwendungstechnische Erfordernisse den Einsatz derartiger Produkte erforderlich machen sollten, bei den erfindungsgemäß beanspruchten Produkten im Falle von Celluloseethern des Typs Methylcellulose oder Methylhydroxyalkylcellulose oder Hydroxyalkylcellulose bei vorzugsweise DS <1, insbesondere DS <0,8 liegt. Im Falle von Celluloseethern des Typs Carboxymethylcellulose (= CMC) liegt der erfindungsgemäß beanspruchte DS der wasserunlöslichen, wasserquellbaren oder nur alkalilöslichen CMC-Produkte bei vorzugsweise <0,5, insbesondere <0,4, besonders bevorzugt bei <0,2.

In der erfindungsgemäß beanspruchten Hydrokolloidabmischung werden, wenn anwendungstechnische Notwendigkeiten es erforderlich machen, als weitere Additive d), wie z. B. Dispergierhilfsmittel und Weichmachungsmittel eingesetzt. Als bevorzugte Weichmacher werden insbesondere Polyole oder Polyolderivate, insbesondere Glycerinderivate, wie z.B. ethoxyliertes Glycerin, sowie Glycerin selbst beansprucht.

Zusätzlich können zur erfindungsgemäß beanspruchten Hydrokolloidabmischung weitere Additive, wie Quell- und Netzmittel hinzugesetzt werden. Ferner können Antioxidantien, Antistatika, Flammschutzmittel, Verflüssigungsmittel, Konservierungsmittel, Feuchthaltemittel und Luftporenbildner und Stabilisatoren, Prozesshilfsmittel, wie z. B. Mahlhilfsmittel, Weichmacher, biologisch abbaubare Bindemittel (wie z.B. Polyvinylalkohole, Harze auf Cellulose-, Hemicellulose- oder Ligninbasis u.a.), oberflächenaktive Substanzen, Entschäumer, Mattierungsmittel, Farbstoffe oder Färbemittel, Duftstoffe oder verkapselte Duft- oder andere Inhaltsstoffe, Pigmente und Füllstoffe, mikrokristalline Pulver auf Cellulosebasis in der Formulierung enthalten sein. Sollten anwendungstechnische Erfordernisse den Zusatz von Pigmenten oder Füllstoffen erforderlich machen, werden als Pigmente Weiß-, Schwarz- und Buntpigmente, insbesondere anorganische Weißpigmente und Füllstoffe, wie z.B. Kreide, Bentonit, Kaolin, Calcit, Dolomit, Talkum, Schwerspat, Zinkoxid, Titandioxid, Eisen- und Bleioxide, Kieselsäuren, Metallcarbonate, Kieselgur, Calcium- und Aluminiumsilikate beansprucht.

In der Hydrokolloidabmischung liegt der Anteil des kalt- und gleichzeitig heißwasserlöslichen Polysaccharids oder der Polysaccharidabmischung a), bezogen auf die Summe der gesamten erfindungsgemäß beanspruchten Hydrokolloidabmischung, bei 99-1 Gew.-%, insbesondere 95-5 Gew.-%. Das Verhältnis von kaltunwasserlöslichem und gleichzeitig heißwasserlöslichem Biopolymer oder der Biopolymerabmischung b1) oder kaltwasserlöslichem und gleichzeitig heißwasserunlöslichem Biopolymer oder der Biopolymerabmischung b2), zum Anteil des kalt- und gleichzeitig heißwasserlöslichen Polysaccharids oder der Polysaccharidabmischung a) liegt bei 50:1 bis 1:50 Gew.-Teilen, insbesondere bei 30:1 bis 1:30 Gew.-Teilen, vorzugsweise bei 20:1 bis 1:20 Gew.-Teilen. Fasern c), insbesondere Cellulosefasern werden in einer Menge von bis zu 60% bezogen auf die Summe der gesamten erfindungsgemäß beanspruchten Hydrokolloidabmischung sowie weitere Additive d) zugesetzt.

In einer besonders bevorzugten Ausführungsform besteht die Hydrokolloidabmischung aus mindestens einem kalt- und heißwasserlöslichen Polysaccharidether a), insbesondere Carboxymethylcellulose und/oder Carboxymethylstärke, und/oder mindestens einem kalt- und heißwasserlöslichen Biopolymer b1) mit einem thermoreversiblen Gel- oder Schmelzpunkt von < 100°C, insbesondere Gelatine und/oder mindestens einem kalt- und heißwasserunlöslichen Biopolymer b2) mit einem thermoreversiblen Flockpunkt von >25°C, insbesondere Methylhydroxyethylcellulose, Ethylhydroxyethylcellulose, Methylhydroxy-propylcellulose oder Hydroxypropylcellulose und/oder wasserunlöslichen Cellulosefasern oder in Wasser quellbaren teilveretherten Cellulosefasern c) und mindestens einem weiteren Additiv d), bei dem es sich um einen Weichmacher, insbesondere Glycerin, handelt.

Der Begriff des Flockpunktes ("cloud point") bezeichnet substanzspezifische Eigenschaften der in der Hydrokolloidabmischung verwendeten Biopolymere oder Biopolymerderivate b2), die dem Fachmann gut bekannt sind und daher keiner näheren Erläuterung bedürfen (s. z. B. Reinhard Dönges, British Polymer Journal 23 (1990) S. 315-326). Mit dem Begriff des Gel- oder Schmelzpunktes werden für die in der erfindungsgemäß beanspruchten Hydrokolloidabmischung enthaltenen Biopolymere oder Biopolymerderivate b1) substanzspezifische Eigenschaften bei der Herstellung und Verarbeitung von Gelatineprodukten bezeichnet, die dem Fachmann gut bekannt sind und an dieser Stelle nicht weiter erklärt werden [s. z. B. "Hydrokolloide", Firmenzeitschrift Sanofi Bio-Industries GmbH, S. 69 ff (Sanofi Bio.Industries GmbH, Postfach 3304 80, Kanzlerstrasse 4, Düsseldorf)].

Sollte es aus anwendungstechnischen Gründen erwünscht sein, die einzelnen Komponenten der Hydrokolloidabmischung reversibel zu vernetzen, also zeitlich verzögert zu hydrophobieren, um so eine temporäre Lösungsverzögerung einzustellen, um so ein schnelles, klumpenfreies Dispergieren in wässrigen Systemen zu ermöglichen, so kann dies in bekannter Weise mit mono-, bi- und / oder polyfunktionellen Verbindungen, wie z. B. Hydroxycarbonsäuren, Aldehyden u. ä, speziell Glyoxal, unter Zusatz katalytischer Mengen an Säuren, wie z.B. Glyoxylsäure mit oder ohne Zusatz sogenannter Säure-Base-Puffersysteme erfolgen, ohne dass dabei das Wesen der Erfindung berührt wird. Bekannte Vernetzungsmittel sind z.B. Säuren und Anhydride, Aldehyde, wie z. B. Formaldehyd oder Dialdehyde, wie z. B. Glyoxal.

Eine vorzugsweise mit Aldehyden erfolgte reversible Hydrophobierung ist steuerbar durch den Grad der Vernetzung, also die Art und Menge an zugesetztem Vernetzungsreagenz und dem verwendeten Katalysator. Die Hydrophobierung oder temporäre Vernetzung und die darüber eingestellte temporäre Wasserunlöslichkeit der Hydrokolloidabmischung löst sich in wäßrigen Systemen durch intensives Rühren von allein wieder auf. Ebenso ist es möglich, diese durch schrittweise Änderung, z. B. Erhöhung des pH-Wertes gezielt aufzuheben bzw. zu beschleunigen Dies ist jedoch Stand der Technik und wird durch die vorliegende Erfindung nicht beansprucht.

Bei der Herstellung der erfindungsgemäß beanspruchten vernetzten oder unvernetzten Hydrokolloidabmischung können organische oder wässrig-organische Quellmittel oder Wasser als Quellmittel verwendet werden. Unter Quellmittel werden solche Verbindungen verstanden, die zu einer Quellung der Hydrokolloidabmischung führen. Als Quellmittel wird bevorzugt Wasser oder wäßrig-alkoholische Lösungen, wie z.B. Methanol-Wasser- oder Ethanol-Wasser-Gemische o. ä. verwendet. Das Quellmittel wird bevorzugt in einer Menge von 10 - 80 Gew.-%, besonders bevorzugt in einer Menge von 15 - 60 Gew.-% eingesetzt, bezogen auf die gesamte Menge der in der Hydrokolloidzusammensetzung enthaltenen Polysaccharide bzw. Polysaccharidderivate, Biopolymere bzw. Biopolymerderivate und der in der Hydrokolloidabmischung gegebenenfalls enthaltenen Fasern.

Die Zugabe des Quellmittels, vorzugsweise Wasser, kann sowohl zu einer zuvor hergestellten Mischung, bestehend aus Polysaccharid, Polysaccharidderivat oder Polysaccharidabmischung a) und/oder Biopolymer, Biopolymerderivat oder Biopolymerabmischung b1) und/oder b2) einerseits als auch zu mindestens einem in der Hydrokolloidabmischung verwendeten Polysaccharid oder einem in der Biopolymerabmischung b1) und/oder b2) verwendeten Biopolymer andererseits erfolgen. Das ggf. verwendete Vernetzungsmittel kann allein, mit einem Teil oder der Gesamtmenge an zuzusetzendem Wasser zur Hydrokolloidabmischung bzw. dem oder den Polysacchariden oder Polysaccharidderivaten oder Abmischungen derselben a) und/oder dem oder den Biopolymeren oder Biopolymerderivaten oder Abmischungen derselben b1) und/oder b2) und/oder Fasern c) zugegeben werden.

Das Verfahren zur Herstellung der erfmdungsgemäß beanspruchten Hydrokolloidabmischungen ist ökonomisch einfach und ökologisch unbedenklich, da als Quellmittel vorzugsweise Wasser eingesetzt wird. Die Hydrokolloidabmischung kann mit Vernetzungsreagenzien, vorzugsweise Aldehyden, hydrophobiert werden, um beim Eintrag der Hydrokolloidabmischung in Wasser ein klumpenfreies Dispergieren zu gewährleisten und so Folien, Filme und Folien, Papiere oder Beschichtungsmittel mit einer einheitlichen, glatten Oberfläche bereitstellen zu können.

Für die Bereitstellung einer homogenen Mischung der erfindungsgemäß beanspruchten vorgenannten unvernetzten oder reversibel vernetzten Hydrokolloidabmischung, muss für eine gute Durchmischung gesorgt werden. Geeignete Mischaggregate sind geschlossene Mischbehälter mit bewegten Teilen, kontinuierliche Durchlaufinischaggregate, pneumatische Fließbettmischer, rotierende Mischbehälter oder Mischer mit rotierenden Mischwerkzeugen u.a.. Zur Vermeidung von Agglomerationen oder Entmischungen, ist es ferner möglich, den Mischvorgang mit einem Mahlvorgang zu verbinden, Vormischungen herzustellen oder die Homogenisierung durch die Benetzbarkeit mit Zusatzstoffen wie z.B. Tensiden oder Wasser zu verbessern. Geeignete Apparaturen hierzu sind z.B. Kneter, Feuchtgutmischer, Granuliertrommeln, Pelletierteller oder -trommeln. Die Verweilzeit in dem Mischungsaggregat ist unter anderem abhängig von den Knetkräften, die in der verwendeten Rezeptur herrschen. Bevorzugt ist eine Zeit von 15 - 180min. Die nach der vorliegenden Erfindung beanspruchte, oben bezeichnete Hydrokolloidabmischung wird in üblicher und bekannter Weise konfektioniert, das heißt, getrocknet und gemahlen.

Ein weiterer Gegenstand der Erfindung sind redispergierbare Beschichtungen, die aus einer Hydrokolloidzusammensetzung wie vorstehend beschrieben, hergestellt worden sind. Unter Redispergierbarkeit wird dabei verstanden, dass sich die Beschichtung in heißem Wasser bei einer Temperatur über 50°C wieder vollständig löst oder in Einzelbestandteile zerfällt, so dass sich die Beschichtung vom aufgetragenen Objekt ablöst bzw. vollständig entfernen lässt. Die Zeit für den Auflöseprozeß ist dabei abhängig von der Rezeptur und der Trockenschichtdicke der Beschichtung, der Folie, des Films bzw. Papiers sowie von der Art der thermischen und/oder mechanischen Behandlung der die Beschichtung, die Folie, der Film oder das Papier ausgesetzt werden. Zudem ist ist die Redispergierzeit abhängig von der Schichtdicke und damit von der jeweiligen Anwendung, die es erforderlich machen kann, Redispergierzeiten im Bereich von Sekunden bis zu mehreren Stunden einzustellen. Dies kann je nach anwendungstechnischen Erfordernissen durch Änderung der Rezepturen der erfindungsgemäß beanspruchten Produkte gezielt eingestellt werden.

Eine derartige erfindungsgemäße Beschichtung lässt sich im Labormaßstab einfach herstellen, indem eine vorstehend beschriebene und weiter unten beispielhaft beschriebene wäßrige Suspension einer Hydrokolloidzusammensetzung auf das zu beschichtende Objekt, z.B. einen wasserunlöslichen Träger, aufgetragen wird und anschließend bei z.B. 70°C im Ofen getrocknet wird. Solche erfindungsgemäßen Beschichtungen können z.B. als temporäre Schutzfolien in der Automobilindustrie oder als Verpackungsmaterialien für agrochemische, pharmazeutische oder kosmetische Zwecke eingesetzt werden. Möglich ist auch der Einsatz als temporäre Abdeckung von Oberflächen in der Landwirtschaft sowie der Bauindustrie.

Im Pharmabereich können die erfindungsgemäßen Beschichtungen auch zur Umhüllung von Wirkstoffen zur kontrollierten Freisetzung der Wirkstoffe im Körper sowie im Hygienebereich, z.B. zum Auffangen von Körperflüssigkeiten oder Ausscheidungsprodukten, z.B. in Babywindeln, Binden, Inkontinenzeinlagen, eingesetzt werden. Auch der Einsatz der erfindungsgemäßen Beschichtungen im Lebensmittelbereich als Verpackungsmaterial ist möglich.

Ein weiterer Gegenstand der Erfindung sind redispergierbare Filme oder Folien wie Schutz- oder Verpackungsmaterialien, die aus einer der vorstehend beschriebenen erfindungsgemäß beanspruchten Hydrokolloidzusammensetzungen hergestellt werden. Unter redispergierbaren Filmen, Folien, Papieren oder Schutz- oder Verpackungsmaterialien werden Beschichtungen mit Flächengewichten von < 150 g/m² (Papieranwendungen) oder > 150 g/m² (Karton- und Pappenanwendungen), vorzugsweise zwischen 10 und 600 g/m² verstanden.

Für die Verwendung eines redispergierbaren Films als Beschichtung von Waschmitteln für Wasch- und Spülmaschinen kann die temperatursensitive Wasserlöslichkeit bzw. Redispergierbarkeit der erfmdungsgemäßen Beschichtungen dafür ausgenutzt werden, dass z.B. das Waschmittel mit der erfindungsgemäß beanspruchten Folie, dem Film oder dem Papier verpackt wird, wobei sich beim Waschvorgang bei Erwärmung die Beschichtung oder Verpackung in der Waschflotte auflöst und das Waschmittel freisetzt.

Die aus den erfindungsgemäßen Hydrokolloidzusammensetzungen erhältlichen redispergierbaren Beschichtungen, Filme oder Papiere zeigen dabei die folgenden Vorteile:
- 1.: je nach Anwendung einstellbare Wasserlöslichkeit bzw. Redispergierbarkeit, die im Bereich von Sekunden bis zu mehreren Stunden einstellbar ist.
- 2.: gute mechanische Festigkeit
- 3.: gute Einreißfestigkeit
- 4.: einfache und ökonomische Herstellung durch hohe Feststoffgehalte
- 5.: gute Beschreibbarkeit und Bedruckbarkeit
- 6.: Ökotoxikologische Unbedenklichkeit durch Einsatz von in Wasser löslichen oder dispergierbaren Additiven
- 7.: gute guter Spritzwasser- bzw. Kondenswasserschutz
- 8.: gute Lagerstabilität
- 9.: gute biologische Abbaubarkeit und damit geringe Belastung der Umwelt
- 10.: gute Verträglichkeit mit vorzugsweise wasserlöslichen Haftklebestoffen.

Bevorzugt werden die erfindungsgemäßen Hydrokolloidzusammensetzungen zur Herstellung von redispergierbaren Papierprodukten, insbesondere Etikettenpapieren oder Etikettenpapier ähnlichen Produkten, wie z. B. Filmen oder Folien, wie sie z. B. in der Getränkeindustrie eingesetzt werden, eingesetzt. Diese redispergierbaren Papiere, Filme oder Folien können hergestellt werden, indem man die erfmdungsgemäß beanspruchte Hydrokolloidabmischung auf eine Prozessfolie (z.B. PETP) mittels Walzenauftragswerk in Schichtdicken zwischen 50 g/m² bis 600 g/m² flüssig beschichtet. Nach Durchlauf durch einen segmentgesteuerten Trockenkanal erhält man durch Trocknung (Temperaturbereich +40°C bis 95°C) auf der Prozessfolie eine transparent bis opak eingestellte Folie. Diese wird nach Entfernung der Prozessfolie mit einem wasserlöslichen Haftklebstoff, wie er z.B. aus der Patentschrift EP-A 0 379 932 bekannt ist, im Transferverfahren ausgerüstet.

### Beispiele

### Messung der Viskositäten:

Die Messung der Viskositäten erfolgt mit einem Rotationsviskosimeter der Marke Brookfield, Typ RVT, 100 UpM bzw. 50 UpM, wenn nicht anders angegeben bei T= 20°C nach Temperierung in einem Temperierbad [Firma Haake, Karlsruhe, Typ 00/5584 mit Themperierkopf E 3].

### Ermittlung der Redispergierbarkeit:

Die Redispergierbarkeit der so hergestellten Filme wird wie folgt ermittelt: Filmstreifen von ca. 3 cm x 1 cm Größe werden in 200 mL Wasser eines auf einer Magnetrührbank [IKA MAG EOA 9, Janke & Kunkel, Stufe 3,5] stehenden Becherglases [250 mL, hohe Form, mit PTFE TRIKA-Magnetrührstäbchen] per Hand eingegeben. Die Auflösezeit wird optisch ermittelt. Der Film gilt als gelöst (= "Dispergier- bzw. Redispergierzeit"), wenn sich das Material vollständig gelöst hat oder in seine Einzelteile zerfallen ist, so dass kein homogener Film mehr vorliegt.

Wenn nicht anders bezeichnet, werden die Messungen bei 20°C mit einer Stoppuhr durchgeführt. Bei den Filmen, die Gelatine enthalten, wird die Redispergierbarkeit zusätzlich bei 50°C [Wassertemperatur] ermittelt. Die Redispergierbarkeit in kaltem Wasser (20°C) für die hier betrachtete Anwendung ist gut, wenn sich der Film [500 µm Naßfilmstärke] innerhalb von 20 s vollständig gelöst hat oder dieser in seine Einzelteile zerfallen ist. Eine befriedigende Redispergierbarkeit oder Auflösezeit für die hier betrachtete Anwendung liegt dann vor, wenn die Redispergierbarkeit oder Auflösezeit bei 20 - 30 s liegt. Schlechte Redispergierbarkeiten oder Auflösezeiten für die hier betrachtete Anwendung liegen vor, wenn Lösezeiten in kaltem Wasser (20°C) von >30 s aufgenommen werden. Ein guter Kondenswasser- bzw. Spritzwasserschutz für die hier betrachtete Anwendung besteht, wenn das Material [500 µm Naßfilmstärke] in kaltem Wasser (20°C) Auflösezeiten von ca. 15 s - 60 s besitzt und gleichzeitig Auflösezeiten in warmem Wasser von ca. 50°C von mindestens 10-15 s, aber höchstens 30 s besitzt.

### Ermittlung der Stabilität:

Die Stabilität auf einem mit einem wasserlöslichen Polyacrylat-Haftkleber ausgerüstetem Träger wird wie folgt ermittelt: Ein Streifen [5 cm x 5 cm] des vorgenannten getrockneten Films wird per Hand auf einen mit einem wasserlöslichen Haftklebstoff, der nach DE-A 29 04 233 erhältlich ist, beschichteten Liner kaschiert und in einem Laborexsikkator über Calciumchlorid bei Raumtemperatur von ca. 18-22°C gelagert. Als weitere wasserlösliche Haftklebstoffe kommen solche in Frage, wie sie in EP-A 0 764 705, DE-A 390 16 90 oder DE-A 412 62 30 beschrieben werden. Mit einer Präzisionsskalenlampe [Typ 1152/01, Firma Eschenbach, Nürnberg] wird der Film, wenn nicht anders angegeben, nach 2 Wochen vermessen. Die Änderungen der Längenausdehnung oder des Schrumpfes werden auf die vor der Lagerung aufgenommenen Ausmaße bezogen und in Prozent angegeben.

### Ermittlung der Biologischen Abbaubarkeit:

Die Biologische Abbaubarkeit wird gemäß der OECD Richtlinie 302 B; Zahn-Wellens/EMPA-Test (17.07.1992) durchgeführt. Die Bestimmung des TOC (total organic carbon) und DOC (dissolved organic carbon) werden nach EN 1484 durchgeführt SOP 2030-1110203-99 D); DOC-Analyser Shimadzu TOC 5050 A).

### Herstellung der Suspensionen:

Zur Herstellung der in den Beispielen bezeichneten Suspensionen werden die Rezepturbestandteile in ein Becherglas [400 mL bzw. 500 mL, tiefe Form] unter Rühren [Rührer RE 166 der Firma Jahnke & Kunkel, Dispergierscheibe mit Durchmesser 3 cm] bei 1000 UpM eingetragen, bei 2500 UpM kurze Zeit aufgerührt und bei 2000 UpM während 10 Minuten homogenisiert. Die Suspension wird anschließend in ein Schraubdeckelglas (250 mL) eingetragen und über Nacht auf eine Flaschenrollbank gegeben. Anschließend wird die Suspension in einem Temperierbad [Firma Haake, Karlsruhe, Typ 00/5584 mit Temperierkopf E 3], wenn nicht anders angegeben, bei 25°C während 8 Stunden temperiert. Im Anschluss daran wird die Suspension mit einem automatischen Filmaufziehgerät [ERICHSON] auf Glasplatten [33 cm x 28 cm] mit Rakeln unterschiedlicher Stärke [300 µm Rakel (Typ 335, ERICHSON) und 500 µm Rakel (Typ 288, ERICHSON)] aufgerakelt [Aufziehgeschwindigkeit: 6,4 mm/s] und anschließend, wenn nicht anders angegeben, im Trockenschrank [HERAEUS, Typ VT 5042 EK] für die Dauer von 1 h bei 70°C getrocknet.

### Rezepturbestandteile:

Als Rezepturbestandteile werden nachfolgend folgende Komponenten eingesetzt:
- 1.: Handelsübliche Carboxymethylcellulose vom Typ Walocel® CRT 3 G [ WOLFF WALSRODE AG, Walsrode ].
- 2.: Carboxymethylcellulose mit einem Durschnittlichen Substitutionsgrad durch Carboxymethylgruppen von 0,13.
- 3.: Gemahlene Cellulosefasern des Typs Arbocel BE-600-10® , Arbocel BC-200® , [Rettenmaier & Söhne GmbH & Co, Ellwangen-Holzmühle].
- 4.: Glycerin (wasserfrei), Glycerindiacetat (technisch), Glycerintriacetat (rein), Butylglykol (rein), Citronensäure (wasserfrei), Polypropylenglykol, Natrium-DL-Lactat (rein), Natriumoxalat (rein) [FLUKA Chemie AG].
- 5.: Ethoxyliertes Glycerin vom Typ "Weichmachungsmittel 9" ® [BASF, Ludwigshafen].
- 6.: Gelatine des Typs 300 Bloom [DGF Stoess, Eberbach].
- 7.: Kreide des Typs Hydrocarb 90^{(R)} [Omya, Köln].
- 8.: Prozessfolie: Polyethylenfolie der Fa. Polifibra, Agrate Brianza, (transparent, Dicke: 100µm).
- 9.: Wasserlöslicher Haftklebstoff: nach DE-A 29 04 233 erhältlich.

Die im folgenden angegebenen Teile sind Gewichtsteile.

### Vergleichsbeispiel 1

Ein im Markt erhältliches wasserlösliches bzw. redispergierbares Etikettenpapier vom Typ "LOMALABEL 284" [Firma LOHMANN GmbH & Co KG, Neuwied] zeigt mit einer Auflösegeschwindigkeit in kaltem Wasser (20°C) von 13 s sehr gute Redispergierbarkeiten und einer Auflösegeschwindigkeit in warmem Wasser (50°C) von ca. 7 s, einen schlechten Schutz gegenüber Kondens- bzw. Spritzwasser.

### Vergleichsbeispiel 2

Eine im Markt erhältliche in Wasser lösliche Folie der Marke "MONO-SOL MC-1832" (Chris Craft Industrial Products, U.S.A.) zeigt eine Auflösegeschwindigkeit in kaltem Wasser (20°C) von ca. 25 s. Die Folie löst sich auch in >60°C warmem Wasser innerhalb von 30 s nicht auf. Nach Lagerung über 4 Wochen zeigt die Folie, die auf einen mit einem wasserlöslichen Kleber beschichteten Träger kaschiert wird, einen Schrumpf von ca. 7 %, wobei der Haftkleber seine ursprüngliche Ausdehnung beibehalten hat. Derartige Produkte sind zur Herstellung von Etikettenpapieren ungeeignet, da sich der Haftkleber, nach entsprechender Lagerung des Materials, beim Bedrucken bzw. Stanzen des Etiketts auf den Anlagenteilen (Rollen etc.) ablagert und so zu Problemen bei der Verarbeitung (Verkleben von Rollen etc.) führt, die nur durch Maschinenstillstände und aufwendige Reinigungsoperationen zu beheben sind.

### Vergleichsbeispiel 3

In ein 400 mL-Becherglas werden 30 Teile Walocel CRT 3 G zu 170 Teilen Wasser unter Rühren hinzugegeben und in der oben bezeichneten Weise gelöst und zu Filmen ä 500 µm Nassfilmstärke verarbeitet. Die Suspension hat eine Viskosität von 5160 mPas [Brookfield RVT, Spindel 6, 100 UpM]. Die Filme [500 µm Naßfilmstärke] sind nach Trocknung bei 70°C im Umlufttrockenschrank hart, inhomogen, weitgehend transparent, brüchig und sehr unelastisch und spröde. Das Produkt lässt sich nur schwer beschreiben. Die Filme [500 µm Naßfilmstärke] zeigen mit Zeiten von >30 s für die hier interessierende Anwendung schlechte Redispergierbarkeiten in kaltem Wasser (20°C). Der Einsatz derartiger Produkte als wasserlösliches Etikettenpapier ist aufgrund des langen Auflöseprozesses in kaltem Wasser problematisch, da die rückstandsfreie Entfernung derartiger Etiketten, die z.B. für Getränkekästen üblicherweise in Waschstraßen erfolgt, nur durch eine Verlangsamung der Bandgeschwindigkeit gewährleistet werden kann. Nach Lagerung über 4 Wochen zeigt die Folie, die auf einen mit einem wasserlöslichen Kleber ausgerüsteten Träger kaschierte wird, einen Schrumpf von ca. 6 %, wobei der Haftkleber seine ursprüngliche Ausdehnung beibehält (s. Vergleichsbeispiel 2). Das Produkt ist damit nicht zur Herstellung von Etikettenpapieren geeignet.

### Vergleichsbeispiel 4

In ein 400 mL-Becherglas werden 30 Teile Walocel CRT 3 G und 10 Teile Glycerin zu 170 Teilen Wasser unter Rühren hinzugegeben und in der oben bezeichneten Weise gelöst und zu Filmen à 500 µm Nassfilmstärke verarbeitet. Die Suspension hat eine Viskosität von 4560 mPas [Brookfield RVT, Spindel 6, 100 UpM]. Die Filme sind nach Trocknung bei im Umlufttrockenschrank bei 70°C elastisch, transparent und sind gegenüber den in Vergleichsbeispiel 3 bezeichneten Filmen besser beschreibbar. Die Filme zeigen mit Zeiten von >30 s schlechte Redispergierbarkeiten in kaltem Wasser. Der Einsatz derartiger Produkte als wasserlösliches Etikettenpapier ist aufgrund des langen Auflöseprozesses in kaltem Wasser problematisch, (s. o.). Nach Lagerung über 4 Wochen zeigt die Folie, die auf einen mit einem wasserlöslichen Kleber beschichteten Träger kaschiert wird, einen Schrumpf von ca. 8 %, wobei der Haftkleber seine ursprüngliche Ausdehnung beibehalten hat (s. Vergleichsbeispiele 2 und 3). Das Produkt ist nicht zur Herstellung von Etikettenpapieren geeignet.

### Beispiel 5 (Erfindung)

In ein 500 mL-Becherglas werden 54 Teile Walocel CRT 3 G, 40 Teile Glycerin, 10 Teile Hydrocarb 90, 6 Teile Gelatine und 20 Teile Arbocel BE 600-10 ® zu 230 Teilen Wasser unter Rühren hinzugegeben und in der oben bezeichneten Weise gelöst und zu Filmen à 300 µm und 500 µm Nassfilmstärke verarbeitet. Die Suspension hat eine Viskosität von 67.200 mPas [Brookfield RVT, T= 50°C (Innentemperatur), Spindel 7, 50 UpM]. Die Filme werden nach Temperierung der Suspension auf 50°C aufgerakelt. Sie sind nach Trocknung bei 70°C im Umlufttrockenschrank stabil, weiß, glatt, elastisch und gut beschreibbar und weisen mit 17 s [Filme à 300 µm Nassfilmstärke] bzw. 29 s [Filme ä 500 µm Nassfilmstärke] gute bzw. befriedigende Redispergierbar- bzw. Auflösezeiten in kaltem Wasser [T= 20°C] auf. In warmem Wasser [T= 50°C] liegen die Redispergierbar- bzw. Auflösezeiten für Filme à 300 µm Nassfilmstärke bei 10 s und für Filme à 500 µm Nassfilmstärke bei 15 s. Derartig formulierte Filme zeigen einen guten Spritzwasser- und Kondenswasserschutz. Die Filme, die auf den oben bezeichneten mit einem wasserlöslichen Kleber ausgerüsteten Träger kaschiert werden, zeigen nach 4 Wochen Lagerung praktisch keinen Folienschrumpf (<3 %) und sind stabil. Die Biologische Abbaubarkeit nach 28 Tagen liegt bei 63 %.

### Beispiel 6 (Erfindung)

In ein 400 mL-Becherglas werden 27 Teile Walocel CRT 3 G und 25 Teile Glycerin und 20 Teile Arbocel BC 200 ® und 10 Teile Gelatine zu 200 Teilen Wasser unter Rühren hinzugegeben und in der oben bezeichneten Weise gelöst und zu Filmen à 300 µm Nassfilmstärke verarbeitet. Die Suspension hat eine Viskosität von 20.200 mPas [Brookfield RVT, T= 50°C (Innentemperatur), Spindel 6, 100 UpM]. Die Filme werden nach Temperierung der Suspension auf 50°C aufgerakelt. Sie sind nach Trocknung bei 23°C an der Luft stabil, matt-weiß und gut beschreibbar. Sie zeigen Auflösegeschwindigkeiten von 15 s [Filme à 300 µm Nassfilmstärke] bzw. 30 s [Filme ä 500 µm Nassfilmstärke] in kaltem Wasser [T= 20°C] und bei 50°C solche von 10 s [Filme à 300 µm Nassfilmstärke] bzw. 15 s [Filme à 500 µm Nassfilmstärke]. Die Filme zeigen damit einen guten Spritzwasser- und Kondenswasserschutz. Die auf den oben bezeichneten Träger kaschierten Filme zeigen nach 4 Wochen Lagerung einen Folienschrumpf von <2 % und sind daher für die Praxis geeignet. Die Biologische Abbaubarkeit nach 28 Tagen liegt bei 86%.

### Vergleichsbeispiel 7

In ein 400 mL-Becherglas werden 24 Teile Walocel CRT 3 G und 28 Teile Weichmacher des Typs "Weichmachungsmittel 9" und 20 Teile einer im Labormaßstab gefertigten, dem Fachmann in der Herstellung bekannten, gereinigten (NaCl-Gehalt < 1%) und gemahlenen (mittlere Faserlänge 500 µm), wasserunlöslichen CMC mit einem Durchschnittlichen Substitutionsgrad durch Carboxymethylgruppen von DS-CM= 0,13 zu 180 Teilen Wasser unter Rühren hinzugegeben und in der oben bezeichneten Weise gelöst und zu Filmen à 500 µm Nassfilmstärke verarbeitet. Die Suspension hat eine Viskosität von 13.200 mPas [Brookfield RVT, T= 20°C (Innentemperatur), Spindel 7, 100 UpM]. Die Filme sind nach Trocknung bei 23°C an der Luft stabil, matt-weiß, besitzen keinen wolkigen Charakter und sind gut beschreibbar. Sie zeigen Auflösegeschwindigkeiten in kaltem Wasser [T= 20°C] von 16 s und bei 50°C solche von 10 s [Filme à 300 µm Nassfilmstärke]. Die Filme zeigen damit einen guten Spritzwasser- und Kondenswasserschutz. Die auf den oben bezeichneten Träger kaschierten Filme zeigen nach 4 Wochen Lagerung einen Folienschrumpf von <0,5 % und sind daher für die Praxis gut geeignet.

## Patentansprüche

1. Hydrokolloidzusammensetzung, enthaltend eine Abmischung aus
a) ein bis fünf kalt- und gleichzeitig heißwasserlöslichen Polysacchariden und/oder Polysaccharidderivaten und
b1) ein bis fünf kaltwasserunlöslichen und gleichzeitig heißwasserlöslichen Biopolymeren oder Biopolymerderivaten mit einem thermoreversiblen Gel- bzw. Schmelzpunkt <100°C und/oder
b2) ein bis fünf kaltwasserlöslichen und gleichzeitig heißwasserunlöslichen Biopolymeren oder Biopolymerderivaten mit einem thermoreversiblen Flockpunkt im Bereich von 25 bis 100°C und
c) Fasern, insbesondere Cellulosefasern
und gegebenenfalls
d) Additiven.

2. Hydrokolloidzusammensetzung nach Anspruch 1, **dadurch gekennzeichnet, dass** als kalt- und gleichzeitig heißwasserlösliche Polysaccharide und/oder Polysaccharidderivate solche aus der Gruppe der Celluloseether, Stärken, Stärkeether, Guar, Guarether, Alginate, Xanthane eingesetzt werden.

3. Hydrokolloidzusammensetzung nach Anspruch 1, **dadurch gekennzeichnet, dass** als kalt- und gleichzeitig heißwasserlösliche Polysaccharidderivate solche aus der Gruppe der Hydroxyethylcelluloseether, Carboxymethylcelluloseether, Sulfoethylcelluloseether, sowie binäre und ternäre ionische und nicht- ionische Cellulosemischether, wie Alkyl-Carboxymethylcellulosemischether, Hydroxyalkyl-Carboxymethylcellulosemischether,Alkyl- Sulfoethylcellulosemischether, Hydroxyalkyl- Sulfoethylcellulosemischether, Carboxymethyl-Sulfoethylcellulosemischether, Alkyl-Hydroxyalkyl-Carboxymethylcellulosemischether, Hydroxyalkyl- Hydroxyalkylcellulosemischether, Hydroxyalkyl-Alkylcellulosemischether, Alkyl-Hydroxyalkyl-Sulfoethylcellulosemischether eingesetzt werden.

4. Hydrokolloidzusammensetzung nach einem der vorherigen Ansprüche, **dadurch gekennzeichnet, dass** als kaltwasserunlösliche und gleichzeitig heißwasserlösliche Biopolymere oder Biopolymerderivate mit einem thermoreversiblen Gel- bzw. Schmelzpunkt von < 100°C Gelatine und/oder Umsetzungsprodukte von Proteinen oder Polypeptiden mit Acylierungsmitteln, Aldehyden, Epoxiden, Halogenen, Cyanamid oder ungesättigten Verbindungen eingesetzt werden.

5. Hydrokolloidzusammensetzung nach Anspruch 1, **dadurch gekennzeichnet, dass** als kaltwasserlösliche und gleichzeitig heißwasserunlösliche Biopolymere oder Biopolymerderivate mit einem thermoreversiblen Flockpunkt im Bereich von 25 bis 100°C Hydroxyalkylcelluloseether, Hydroxyalkylcellulosemischether, Alkylcellulosemischether und/oder Alkyl-Hydroxyalkylcellulosemischether eingesetzt werden.

6. Hydrokolloidzusammensetzung nach Anspruch 1, **dadurch gekennzeichnet, dass** als kalt- und gleichzeitig heißwasserlösliches Polysaccharidderivat Carboxymethylcelluloseether und als kaltwasserunlösliches und heißwasserlösliches Biopolymer mit einem thermoreversiblen Gel- bzw. Schmelzpunkt Gelatine und als kaltwasserlösliches und heißwasserunlösliches Biopolymer oder Biopolymer- derivat mit einem thermoreversiblen Flockpunkt Ethyl-, Ethylhydroxyethyl-, Methylhydroxyethyl-, Methylhydroxypropyl-, Hydroxyethyl-Hydroxypropyl- und/oder Hydroxypropylcellulose eingesetzt wird.

7. Hydrokolloidzusammensetzung nach Anspruch 1, **dadurch gekennzeichnet, dass** als Fasern gemahlene Cellulosefasern eingesetzt werden.

8. Hydrokolloidzusammensetzung nach Anspruch 1, **dadurch gekennzeichnet, dass** als Additive Weichmachungsmittel, insbesondere Glycerinderivate und Glycerin selbst eingesetzt werden.

9. Verwendung einer Hydrokolloidzusammensetzung gemäß einem der Ansprüche 1 bis 8 zur Herstellung eines redispergierbaren Films, eines redispergierbaren Papiers oder einer redispergierbaren Folie oder Beschichtung.

10. Verwendung einer Hydrokolloidzusammensetzung gemäß einem der Ansprüche 1 bis 8 zur Herstellung eines redispergierbaren Papierproduktes, einer redispergierbaren Papierbeschichtung oder eines Substitutes für Papierprodukte oder Oberflächenbeschichtungsmassen.

11. Redispergierbare Filme, Folien oder Beschichtungen erhältlich aus einer Hydrokolloidzusammensetzung gemäß einem der Ansprüche 1 bis 8.

12. Redispergierbares Papierprodukt erhältlich aus einer Hydrokolloidzusammensetzung gemäß einem der Ansprüche 1 bis 8.

13. Redispergierbarer Film, redispergierbare Folie oder redispergierbares Papier und daraus hergestellte Etiketten, erhältlich aus einer Hydrokolloidzusammensetzung gemäß einem der Ansprüche 1 bis 8.

## Claims

1. Hydrocolloid composition comprising a blend of
a) one to five polysaccharides and/or polysaccharide derivatives soluble in both cold and hot water and
b1) one to five biopolymers or biopolymer derivatives insoluble in cold water but soluble in hot water and having a thermoreversible gel point or melting point of <100°C and/or
b2) one to five biopolymers or biopolymer derivatives soluble in cold water but insoluble in hot water and having a thermoreversible cloud point in the range from 25 to 100°C, and
c) fibres, especially cellulose fibres
and optionally
d) additives.

2. Hydrocolloid composition according to Claim 1, **characterized in that** polysaccharides and/or polysaccharide derivatives soluble in both cold and hot water that are used are those from the group of cellulose ethers, starches, starch ethers, guar, guar ethers, alginates and xanthans.

3. Hydrocolloid composition according to Claim 1, **characterized in that** polysaccharide derivatives soluble in both cold and hot water that are used are those from the group of hydroxyethylcellulose ethers, carboxymethylcellulose ethers, sulphoethylcellulose ethers, and also binary and ternary ionic and non-ionic cellulose mixed ethers, such as alkyl-carboxymethylcellulose mixed ethers, hydroxyalkyl-carboxymethylcellulose mixed ethers, alkyl-sulphoethylcellulose mixed ethers, hydroxyalkyl-sulphoethylcellulose mixed ethers, carboxymethyl-sulphoethylcellulose mixed ethers, alkyl-hydroxyalkyl-carboxymethylcellulose mixed ethers, hydroxyalkyl-hydroxyalkylcellulose mixed ethers, hydroxyalkyl-alkylcellulose mixed ethers and alkyl-hydroxyalkyl-sulphoethylcellulose mixed ethers.

4. Hydrocolloid composition according to any one of the preceding claims, **characterized in that** biopolymers or biopolymer derivatives insoluble in cold water but soluble in hot water and having a thermoreversible gel point or melting point of <100°C that are used are gelatine and/or reaction products of proteins or polypeptides with acylating agents, aldehydes, epoxides, halogens, cyanamide or unsaturated compounds.

5. Hydrocolloid composition according to Claim 1, **characterized in that** biopolymers or biopolymer derivatives soluble in cold water but insoluble in hot water and having a thermoreversible cloud point in the range from 25 to 100°C that are used are hydroxyalkylcellulose ethers, hydroxyalkylcellulose mixed ethers, alkylcellulose mixed ethers and/or alkyl-hydroxyalkylcellulose mixed ethers.

6. Hydrocolloid composition according to Claim 1, **characterized in that** carboxymethylcellulose ether is used as polysaccharide derivative soluble in both cold and hot water and gelatine is used as biopolymer insoluble in cold water, soluble in hot water and having a thermoreversible gel point or melting point, and ethyl-, ethylhydroxyethyl-, methylhydroxyethyl-, methylhydroxypropyl-, hydroxyethyl-hydroxypropyl- and/or hydroxypropylcellulose is used as biopolymer or biopolymer derivative soluble in cold water, insoluble in hot water and having a thermoreversible cloud point.

7. Hydrocolloid composition according to Claim 1, **characterized in that** fibres that are used are ground cellulose fibres.

8. Hydrocolloid composition according to Claim 1, **characterized in that** additives that are used are plasticizers, especially glycerol derivatives and glycerol itself.

9. Use of a hydrocolloid composition according to any one of Claims 1 to 8 for producing a redispersible film, a redispersible paper or a redispersible sheet or coating.

10. Use of a hydrocolloid composition according to any one of Claims 1 to 8 for producing a redispersible paper product, a redispersible paper coating or a substitute for paper products or surface-coating compositions.

11. Redispersible films, sheets or coatings obtainable from a hydrocolloid composition according to any one of Claims 1 to 8.

12. Redispersible paper product obtainable from a hydrocolloid composition according to any one of Claims 1 to 8.

13. Redispersible film, redispersible sheet or redispersible paper and labels produced therefrom, obtainable from a hydrocolloid composition according to any one of Claims 1 to 8.

## Revendications

1. Composition hydrocolloïdale contenant un mélange de :
a) un à cinq polysaccharides et/ou dérivés de polysaccharides solubles à l'eau froide et également à l'eau chaude, et
b1) un à cinq biopolymères ou dérivés de biopolymères insolubles à l'eau froide mais solubles à l'eau chaude, avec un point de gélification ou de fusion thermoréversible inférieur à 100°C et/ou
b2) un à cinq biopolymères ou dérivés de biopolymères solubles à l'eau froide mais insolubles à l'eau chaude, avec un point de floculation thermoréversible qui se situe dans l'intervalle de 25 à 100°C
et
c) des fibres, plus particulièrement des fibres de cellulose et le cas échéant
d) des additifs.

2. Composition hydrocolloïdale selon la revendication 1, **caractérisée en ce que**, en tant que polysaccharides et/ou dérivés de polysaccharides solubles à l'eau froide et également solubles à l'eau chaude, on a utilisé des produits pris dans le groupe des éthers cellulosiques, des amidons, des éthers d'amidon, de la gomme guar, des éthers de gomme guar, des alginates, des xanthannes.

3. Composition hydrocolloïdale selon la revendication 1, **caractérisée en ce que**, en tant que dérivés de polysaccharides solubles à l'eau froide et simultanément solubles à l'eau chaude on a utilisé des produits du groupe des éthers d'hydroxyéthylcellulose, des éthers de carboxyméthylcellulose, des éthers de sulfoéthylcellulose, ainsi que des éthers mixtes binaires et ternaires, ioniques et non ioniques de cellulose, tels que des éthers mixtes d'alkyl-carboxyméthylcellulose, des éthers mixtes d'hydroxyalkyl-carboxyméthylcellulose, des éthers mixtes de sulfoéthylcellulose, des éthers mixtes d'hydroxyalkyl-sulfoéthylcellulose, des éthers mixtes de carboxyméthyl-sulfoéthylcellulose, des éthers mixtes d'alkyl-hydroxyalkyl-carboxyméthylcellulose, des éthers mixtes d'hydroxyalkylhydroxyalkylcellulose, des éthers mixtes d'hydroxyalkyl-alkylcellulose, des éthers mixtes d'alkyl-hydroxyalkyl-sulfoéthylcellulose.

4. Composition hydrocolloïdale selon l'une des revendications qui précède, **caractérisée en ce que**, en tant que biopolymères ou dérivés de biopolymères insolubles à l'eau froide mais solubles à l'eau chaude, avec un point de gélification ou de fusion thermoréversible inférieur à 100°C, on a utilisé la gélatine et/ou des produits de réaction de protéines ou de polypeptides avec des agents acylants, des aldéhydes, des époxydes, des halogènes, le cyanamide ou des composés insaturés.

5. Composition hydrocolloïdale selon la revendication 1, **caractérisée en ce que**, en tant que biopolymères ou dérivés de biopolymères solubles à l'eau froide mais insolubles à l'eau chaude, avec un point de floculation thermoréversible se situant dans l'intervalle de 25 à 100°C, on a utilisé des éthers d'hydroxyalkylcellulose, des éthers mixtes d'hydroxyalkylcellulose, des éthers mixtes d'alkylcellulose et/ou des éthers mixtes d'alkyl-hydroxyalkylcellulose.

6. Composition hydrocolloïdale selon la revendication 1, **caractérisée en ce que**, en tant que dérivé de polysaccharide soluble à l'eau froide et également soluble à l'eau chaude, on a utilisé un éther de carboxyméthylcellulose et en tant que biopolymère insoluble à l'eau froide et soluble à l'eau chaude avec un point de gélification ou de fusion thermoréversible, on a utilisé la gélatine, et en tant que biopolymère ou dérivé de biopolymère soluble à l'eau froide et insoluble à l'eau chaude avec un point de floculation thermoréversible on a utilisé l'éthyl-, l'éthylhydroxyéthyl-, la méthylhydroxyéthyl-, la méthylhydroxypropyl-, l'hydroxyéthyl-, l'hydroxypropyl- et/ou l'hydroxypropyl-celluloses.

7. Composition hydrocolloïdale selon la revendication 1, **caractérisée en ce que** les fibres utilisées sont des fibres de cellulose broyées.

8. Composition hydrocolloïdale selon la revendication 1, **caractérisée en ce que**, en tant qu'additifs, on a utilisé des plastifiants, en particulier des dérivés de glycérol et le glycérol lui-même.

9. Utilisation d'une composition hydrocolloïdale selon l'une des revendications 1 à 8 pour la fabrication d'une pellicule redispersable, d'un papier redispersable ou d'une feuille ou d'un revêtement redispersables.

10. Utilisation d'une composition hydrocolloïdale selon l'une des revendications 1 à 8 pour la fabrication d'un produit de papier redispersable, d'un revêtement de papier redispersable ou d'un substitut pour produits de papier ou masses de revêtement superficiel.

11. Pellicules, feuilles ou revêtements redispersables, obtenus à partir d'une composition hydrocolloïdale selon l'une des revendications 1 à 8.

12. Produit de papier redispersable obtenu à partir d'une composition hydrocolloïdale selon l'une des revendications 1 à 8.

13. Pellicule redispersable, feuille redispersable ou papier redispersable et étiquette fabriquée à partir de ceux-ci, obtenus à partir d'une composition hydrocolloïdale selon l'une des revendications 1 à 8.
